# EUROPÄISCHE PATENTSCHRIFT

(11) **EP 1 161 336 B1**
(45) Veröffentlichungstag und Bekanntmachung des Hinweises auf die Patenterteilung: **23.04.2003**
(21) Anmeldenummer: 00914131.8
(22) Anmeldetag: 14.03.2000
(51) Int. Cl.: B29C 65/20, B29K 23/00

(54) **VERFAHREN ZUR VERBINDUNG EINES ROHRES AUS PE-X UND EINES ROHRFORMSTÜCKS AUS PE DURCH HEIZELEMENT-MUFFENSCHWEISSEN, VORRICHTUNG ZUR DURCHFÜHRUNG DES VERFAHRENS UND NACH DEM VERFAHREN HERGESTELLTE VERBINDUNG**
METHOD FOR JOINING A PIPE MADE OF PE-X TO A PIPE FITTING MADE OF PE BY HEATING ELEMENT SOCKET WELDING, DEVICE FOR CARRYING OUT SAID METHOD AND JUNCTION PRODUCED BY SAID METHOD
PROCEDE POUR ASSEMBLER UN TUYAU EN POLYETHYLENE RETICULE (PE-X) ET UN RACCORD EN POLYETHYLENE NON RETICULE, EVENTUELLEMENT MODIFIE (PE), PAR SOUDAGE PAR THERMOELEMENTS PAR RACCORD A RESISTANCES SUPERPOSEES

(30) Priorität: 16.03.1999 DE 19911705
(43) Veröffentlichungstag der Anmeldung: 12.12.2001
(73) Patentinhaber: Poloplast GmbH, 87640 Ebenhofen (DE)
(72) Erfinder: BIRKE, Karl, D-87640 Ebenhofen (DE); KÖHNKE, Klaus, D-87616 Marktoberdorf (DE); SCHREIBER, Michael, D-87600 Kaufbeuren (DE)
(74) Vertreter: Oedekoven, Wolf-Dieter, Dipl.-Ing.
(86) Internationale Anmeldenummer: EP0002233
(87) Internationale Veröffentlichungsnummer: WO00054960

(56) Entgegenhaltungen:
- EP-A- 0 329 349
- EP-A- 0 329 350
- DD-A- 139 544
- DE-A- 2 454 706
- FR-A- 2 195 767
- FR-A- 2 382 324
- GB-A- 2 246 318
- US-A- 3 133 846
- US-A- 3 788 928
- PATENT ABSTRACTS OF JAPAN vol. 011, no. 105 (M-577), 3. April 1987 (1987-04-03) & JP 61 254332 A (DAINICHI NIPPON CABLES LTD), 12. November 1986 (1986-11-12)

## Beschreibung

Polyethylen hoher Dichte (PE-HD) verbunden werden ( DIN 16 963 / Teile 8, 9 und 10 " Winkel bzw. T - Stücke bzw. Muffen und Kappen aus Spritzguß für Muffenschweißung, Maße " ).

Das Heizelement-Muffenschweißen von Kunststoffen ist ebenfalls geregelt (DIN 1910 / Teil 3 " Schweißen von Kunststoffen, Verfahren ", Abschnitt 1.1.4 "Heizelement-Muffenschweißen " und Merkblatt DVS 2207 / Teil 1 " Schweißen von thermoplastischen Kunststoffen, PE hart ( Polyethylen hart ), Rohre und Rohrleitungsteile für Gas- und Wasserleitungen ", Abschnitt 3.5 " Heizelement-Muffenschweißen " sowie Richtlinie DVS 2208/ Teil 1 " Maschinen und Geräte zum Schweißen von thermoplastischen Kunststoffen, Heizelementschweißen", Abschnitt 5 "Heizelement-Muffenschweißmaschinen").

Es ist bekannt, ein Rohr oder Rohrformstück aus vemetztem Polyethylen ( PE-X ) und ein Rohr aus unvemetztem Polyethylen mittlerer Dichte (PE-MD) durch Heizelement-Stumpfschweißen miteinander zu verbinden (EP 0 329 349 B1 ). Es ist ferner bekannt, zwei Rohre aus vernetztem Polyethylen (PE-X) mittels einer Elektroschweißmuffe aus unvernetztem Polyethylen (PE) und zwei Rohre aus vernetztem Polyolefin, insbesondere unschmelzbarem hochvernetztem Polyolefin, mit Hilfe einer Elektroschweißmuffe aus unvemetztem Polyethylen hoher Dichte (PE-HD) miteinander zu verbinden ( EP 0 333 379 B1 bzw. DE 39 29 326 A1 ).

Zum Stande der Technik gehört es auch, beim gegenseitigen Verbinden eines Rohres aus thermoplastischem Kunststoff und einer Muffe aus thermoplastischem Kunststoff im Wege des Heizelement-Muffenschweißens das zu verschweißende Rohrende außen und das zu verschweißende Muffenende innen konisch auszubilden und diese Enden mit demselben Konuswinkel im Bereich von 5° bis 25°, vorzugsweise im Bereich von 8° bis 15°, zu versehen, insbesondere mit einem Konuswinkel von 10°. Es kommt ein Heizelement mit einer eine konische innere Nutzfläche aufweisenden Heizmuffe zum Erwärmen des Rohres und mit einem eine konische äußere Nutzfläche aufweisenden Heizdom zum Erwärmen der Muffe zum Einsatz, wobei die Nutzflächen denselben Konuswinkel aufweisen, welcher mit dem Konuswinkel des zu verschweißenden Rohrendes und des zu verschweißenden Muffenendes identisch ist. In das zu verschweißende Ende des Rohres kann ein Stützring, vorzugsweise aus nicht rostendem Material, wie einem Chrom / Nickel-Stahl, eingesetzt werden (DE 24 54 706 A1 ).

Bei einem ähnlichen bekannten Verfahren zur gegenseitigen Verbindung eines Rohres und einer Muffe aus demselben thermoplastischen Kunststoff, beispielsweise aus chloriertem Polyvinylchlorid oder aus Polyvinylidenfluorid oder aus einem gewöhnlichen Vinylchlorid-Kunststoff, durch Heizelement-Muffenschweißen wird nur das zu verschweißende Muffenende innen konisch ausgebildet, und zwar mit einer Steigung bzw. einer Abnahme des Innendurchmessers des Muffenendes in Bezug auf die Länge des Muffenendes im Bereich von 1:30 bis 1:45. Es wird ein Heizelement mit einer Heizmuffe zum Erwärmen des Rohres und mit einem Heizdorn zum Erwärmen der Muffe verwendet, welche jeweils aus Aluminium bestehen und deren jeweilige innere bzw. äußere Nutzfläche mit Polytetrafluorethylen beschichtet ist. Nur die äußere Nutzfläche des Heizdorns ist konisch ausgebildet, so daß ihr Konuswinkel demjenigen der konischen Bohrung des zu verschweißenden Muffenendes entspricht Statt das zu verschweißende Muffenende innen konisch auszubilden, ist es auch möglich, das zu verschweißende Rohrende außen konisch auszubilden ( EP 0 186 168 B1).

Bekannt ist es weiterhin, zwei Rohre oder Rohrformstücke oder ein Rohr und ein Rohrformstück aus vernetztem Polyethylen ( PE-X ) durch Verkleben miteinander zu verbinden, wobei ein besonderer Kleber verwendet wird und eine Vorrichtung zum Einsatz kommt, welche ein Heizelement mit einer Heizmuffe und einem Heizdom aufweist. Mit Hilfe des Heizelementes werden die beiden Rohre oder Rohrformstücke oder das Rohr und das Rohrformstück, welche miteinander verbunden werden sollen, zunächst vorgewärmt und nach der anschließenden Beschichtung mit dem Kleber einer Haupterwärmung unterzogen, wonach das Heizelement entfernt wird und die Rohre oder Rohrformstücke oder das Rohr und das Rohrformstück zusammengepreßt werden ( JP 61-254 332 A).

Der Erfindung liegt die Aufgabe zugrunde, eine dauerhaft feste und dichte Verbindung von Rohren mit Rohrformstücken im Wege des Heizelement-Muffenschweißens zu ermöglichen, und zwar von Rohren, die mindestens in dem an die zu verschweißende Oberfläche angrenzenden Bereich aus vernetztem Polyethylen (PE-X) bestehen, mit Rohrformstücken aus unvemetztem, gegebenenfalls modifiziertem Polyethylen (PE).

Diese Aufgabe ist durch das im Patentanspruch 1 angegebene Verfahren gelöst. Vorteilhafte Ausgestaltungen des erfindungsgemäßen Verfahrens sind in den Patentansprüchen 2 bis 12 gekennzeichnet.

Gegenstand der Erfindung ist ferner die in den Patentansprüchen 13 bis 16 angegebene Vorrichtung zur Durchführung des erfindungegemäßen Verfahrens, ebenso wie die nach dem erfindungsgemäßen Verfahren hergestellte Verbindung (Patentanspruch 17 ).

Nachstehend ist eine bevorzugte Ausführungsform der Erfindung anhand von Zeichnungen beispielsweise beschrieben. Darin zeigen, jeweils im Längsschnitt :
- Fig. 1: ein Rohr und ein Rohrformstück vor dem gegenseitigen Verschweißen unter Einschluß einer Stützhülse;
- Fig. 2: das beim gegenseitigen Verschweißen des Rohres und des Rohrformstücks unter Einschluß der Stützhülse gemäß Fig. 1 im Wege des Heizelement-Muffenschweißens verwendete Heizelement;
- Fig. 3: das Rohr mit eingesetzter Stützhülse und das Rohrformstück nach Fig. 1 vor dem Einschieben in bzw. Aufschieben auf das Heizelement gemäß Fig. 2;
- Fig. 4: das Rohr mit eingesetzter Stützhülse und das Rohrformstück gemäß Fig. 1 nach dem Einschieben in bzw. Aufschieben auf das Heizelement nach Fig. 2;
- Fig. 5: das Rohr und das Rohrformstück gemäß Fig. 1 nach dem gegenseitigen Verschweißen unter Einschluß der Stützhülse nach Fig.1;
- Fig. 6: bei einer Variante das Rohr und das Rohrformstück vor dem Aufschieben auf bzw. Einschieben in das zugehörige Heizelement;
- Fig. 7: das Rohr und das Rohrformstück gemäß Fig. 6 nach dem gegenseitigen Verschweißen.

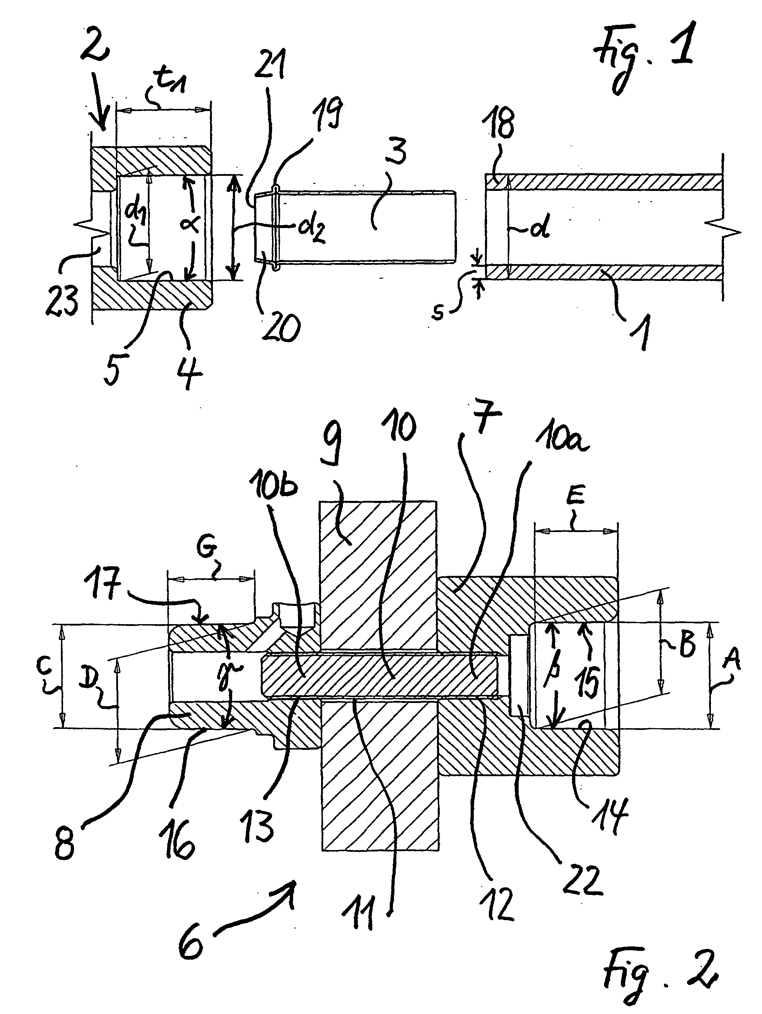

In Fig. 1 sind ein flexibles Rohr 1 aus vemetztem Polyethylen (PE-X) und ein Rohrformstück 2 aus unvemetztem, jedoch zur Verringerung des Schmelzindex MFI (DIN 53 735) modifiziertem Polyethylen mittlerer Dichte (PE-MD) dargestellt, welche miteinander verschweißt werden sollen, und zwar unter Verwendung der in Fig. 1 weiterhin gezeigten Stützhülse 3 aus Messing.

Das Rohr 1 weist einen Außendurchmesser d von 18 + 0,3 mm und eine Wandstärke s von 2,5 + 0,5 mm auf, entsprechend E DIN 16 893. Der mit dem Rohr 1 zu verschweißende Abschnitt 4 des Rohrformstücks 2 ist mit einer konischen Bohrung 5 versehen, welche einen inneren Enddurchmesser d₁ von 17,8 - 0,3 mm, einen mündungsseitigen Enddurchmesser d₂ von 18,0 - 0,3 mm und eine Mindestlänge t₁ von etwa 14 mm aufweist, so daß der Konuswinkel α der konischen Bohrung 5 also DIN 16 963 / Teile 8 bis 10 entspricht.

Das Rohr 1 und das Rohrformstück 2 werden durch Heizelement-Muffenschweißen miteinander verbunden. Dabei wird das in Fig. 2 wiedergegebene Heizelement 6 verwendet, welches aus einer Heizmuffe 7 zum Erwärmen des Rohres 1, einem Heizdorn 8 zum Erwärmen des Rohrformstücks 2 und einer mittleren Heizplatte 9 besteht. Die Heizmuffe 7 und der Heizdorn 8 sind auf der einen bzw. anderen Seite der Heizplatte 9 an derselben befestigt, und zwar-mittels eines Schraubenbolzens 10, welcher eine Querbohrung 11 der Heizplatte 9 durchsetzt und auf dessen beide aus der Querbohrung 11 ragende Enden 10a und 10b die mit einer entsprechenden Gewindebohrung 12 versehene Heizmuffe 7 bzw. der ebenfalls mit einer entsprechenden Gewindebohrung 13 versehenen Heizdom 8 aufgeschraubt sind.

Die Heizmuffe 7 des Heizelements 6 weist eine konische innere Nutzfläche 14 auf, welche mit einer Beschichtung 15 versehen ist, die gegenüber dem Rohr 1 überhaupt keine oder allenfalls eine sehr geringe Antihaftwirkung hat, so daß die Haftkraft zwischen dem Rohr 1 und der Heizmuffe 7 beim Herausziehen des Rohres 1 aus der Heizmuffe 7 ein Aufreißen und eine entsprechende Vergrößerung der zu verschweißenden äußeren Oberfläche des Rohres 1 bewirkt. Der Heizdorn 8 des Heizelementes 6 weist eine konische äußere Nutzfläche 16 auf, welche mit einer Beschichtung 17 versehen ist, die gegenüber dem Rohrformstück 2 eine zur Verhinderung des Anhaftens des Rohrformstücks 2 am Heizdorn 8 ausreichende bis außerordentliche starke Antihaftwirkung hat.

Die konische Nutzfläche 14 der Heizmuffe 7 weist mit der Beschichtung 15 in aufgeheiztem Zustand der Heizmuffe 7 einen mündungsseitigen Enddurchmesser A von etwa 18,1 mm, einen bodenseitigen Enddurchmesser B von etwa 17,5 mm und eine Länge E von etwa 12 mm auf, was einem Konuswinkel β entspricht, der merklich größer ist als durch die Richtlinie DVS 2208 / Teil 1 vorgegeben. Auch die beiden Enddurchmesser A, B sind größer als durch die Richtlinie DVS 2208 / Teil 1 definiert.

Die konische Nutzfläche 16 des Heizdorns 8 weist mit der Beschichtung 17 in aufgeheiztem Zustand des Heizdorns 8 einen kopfseitigen Enddurchmesser C von etwa 17,9 mm, einen fußseitigen Enddurchmesser D von etwa 18,1 mm und eine Länge G von etwa 14 mm auf, was einem Konuswinkel γ entspricht, wie durch die Richtlinie DVS 2208 / Teil 1 vorgegeben, während die beiden Enddurchmesser C, D größer sind als durch die Richtlinie DVS 2208 / Teil 1 definiert.

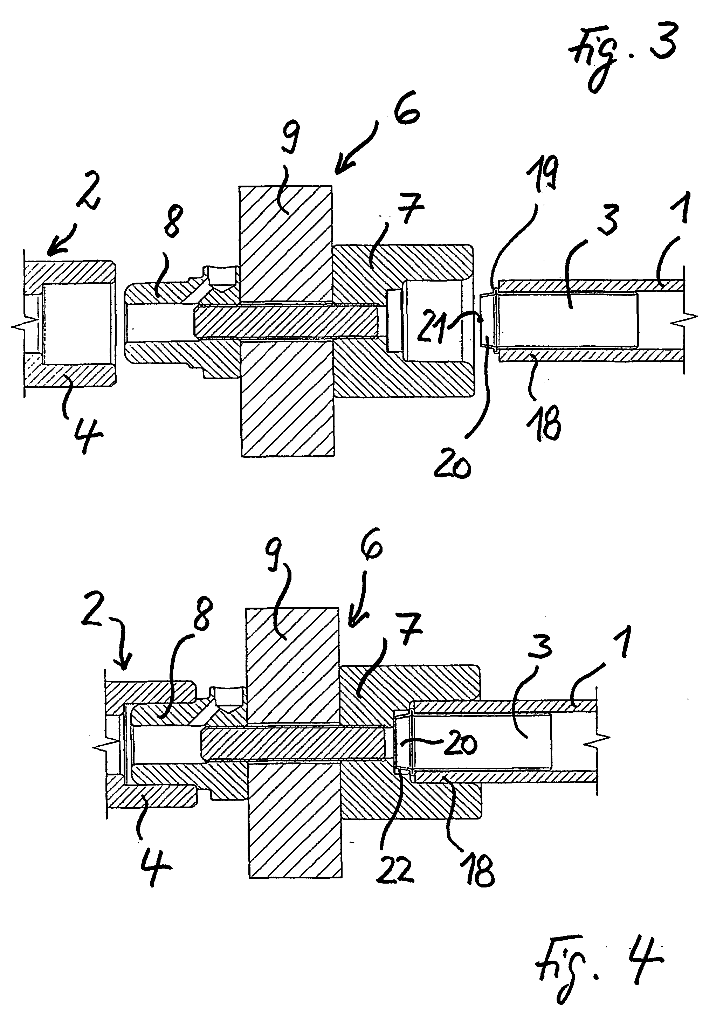

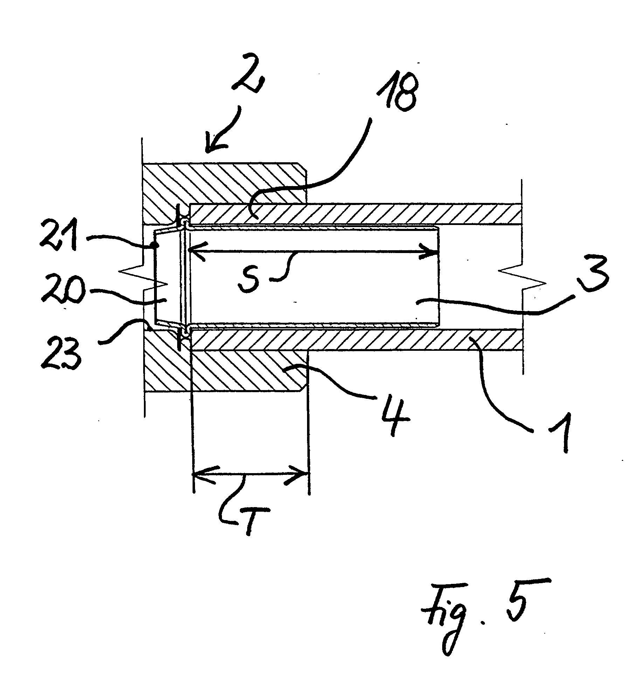

Gemäß Fig. 3 wird zunächst die Stützhülse 3 in das Rohr 1 eingesteckt, bis sie an dem zu verschweißenden Ende 18 des Rohres 1 mit einem äußeren Ringvorsprung 19 anliegt, von dem ein axialer Fortsatz 20 absteht, der sich zu seinem freien Ende 21 hin verjüngt. Nach Fig. 4 wird dann das Rohrende 18 zusammen mit der Stützhülse 3 in die Heizmuffe 7 des Heizelementes 6 eingeschoben, wobei der axiale Fortsatz 20 der Stützhülse 3 in einer Vertiefung 22 der Heizmuffe 7 aufgenommen wird, die im Anschluß an die Nutzfläche 14 der Heizmuffe 7 vorgesehen ist. Gleichzeitig wird das Rohrformstück 2 auf den Heizdorn 8 des Heizelementes 6 aufgeschoben, und zwar mit seinem mit dem Rohr 1 zu verschweißenden Abschnitt 4, der mit der konischen Bohrung 5 versehen ist, deren beide Enddurchmesser d₁, d₂ an die beiden Enddurchmesser C, D der Nutzfläche 16 des Heizdorns 8 angepaßt sind.

Das Heizelement 6 ist auf eine Schweißtemperatur im Bereich von 260 ± 10°C bis 310 ± 10°C erwärmt, die also gleich derjenigen oder geringfügig höher als diejenige ist, welche durch das Merkblatt DVS 2207 / Teil 1 vorgegeben ist. Das Rohr 1 bzw. dessen Ende 18 und das Rohrformstück 2 bzw. dessen Abschnitt 4 werden während einer Anwärmzeit im Bereich von 5 s bis 10 s, also entsprechend Merkblatt DVS 2207 / Teil 1 oder geringfügig länger, in der Heizmuffe 7 bzw. auf dem Heizdom 8 des Heizelementes 6 gehalten, um dann während einer Umstellzeit von etwa 4 s davon weggezogen und so ineinandergesteckt zu werden, wie aus Fig. 5 ersichtlich, woran sich eine Abkühlzeit von etwa 2 min anschließt ( vgl. Merkblatt DVS 2207 / Teil 1 ).

Gemäß Fig. 5 entspricht die Länge S der Stützhülse 3 mindestens dem Zweifachen der Einschweißtiefe T des Rohres 1 in dem Rohrformstück 2 und greift der axiale Fortsatz 20 der Stützhülse 3 in die dem Rohr 1 benachbarte Bohrung 23 des Rohrformstücks 2 ein. Die Stützhütse 3 stabilisiert das im Vergleich zum Rohrformstück 2 länger weich bleibende Rohr 1 und verhindert insbesondere eine Einschnürung und eine Verschiebung des Rohres 1 im Rohrformstück 2 vor der vollständigen Abkühlung der gesamten Verbindung nach Fig. 5. Der in die Bohrung 23 des Rohrformstücks 2 eintauchende axiale Fortsatz 20 der Stützhülse 3 verhindert jegliche Verengung der Bohrung 23 beim Ineinanderstecken des auf Schweißtemperatur erwärmten Rohres 1 und des auf Schweißtemperatur erwärmten Rohrformstücks 2 durch weggedrücktes Rohrformstückmaterial.

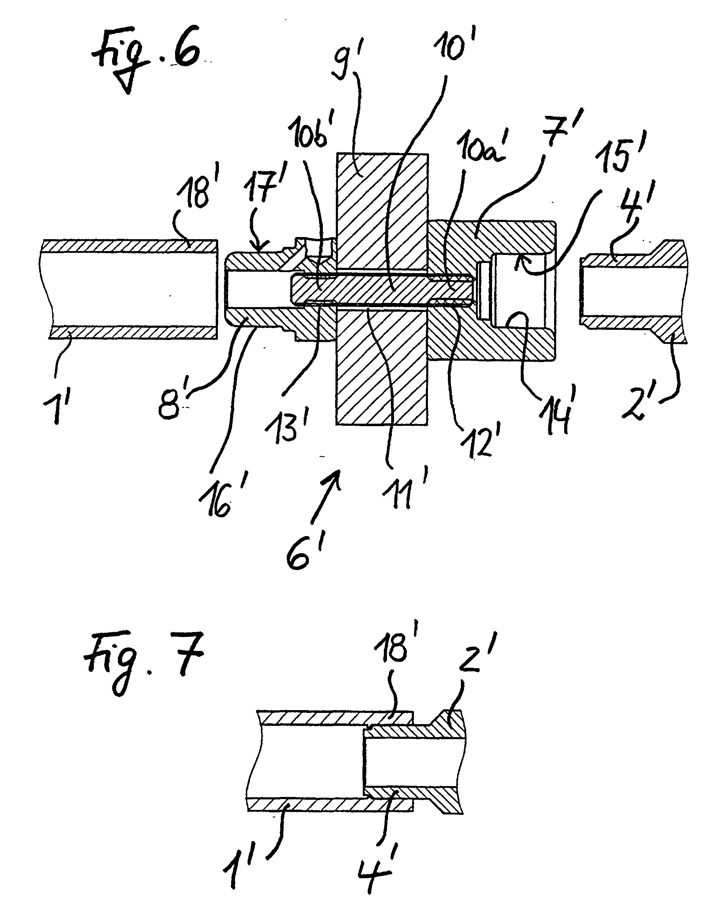

Die Variante gemäß Fig. 6, 7 unterscheidet sich vom Heizelement-Muffenschweißen nach Fig. 1 bis 5 im wesentlichen nur durch eine Umkehrung dergestalt, daß das flexible Rohr 1' aus vernetztem Polyethylen (PE-X) innen und das Rohrformstück 2' aus unvernetztem Polyethylen (PE) außen miteinander verschweißt werden.

Dabei wird das in Fig. 6 wiedergegebene Heizelement 6' verwendet, welches aus einer Heizmuffe 7' zum Erwärmen des Rohrformstücks 2', einem Heizdorn 8' zum Erwärmen des Rohres 1' und einer mittleren Heizplatte 9' besteht Die Heizmuffe 7' und der Heizdorn 8' sind auf der einen bzw. anderen Seite der Heizplatte 9' an derselben befestigt, und zwar mittels eines Schraubenbolzens 10', welcher eine Querbohrung 11' der Heizplatte 9' durchsetzt und auf dessen beide aus der Querbohrung 11' ragende Enden 10a' und 10b' die mit einer entsprechenden Gewindebohrung 12' versehene Heizmuffe 7' bzw. der ebenfalls mit einer entsprechenden Gewindebohrung 13' versehenen Heizdorn 8' aufgeschraubt sind.

Die Heizmuffe 7' des Heizelementes 6' weist eine konische innere Nutzfläche 14' auf, welche mit einer Beschichtung 15' versehen ist, die gegenüber dem Rohrformstück 2' eine zur Verhinderung des Anhaftens des Rohrformstücks 2' an der Heizmuffe 7' ausreichende bis außerordentliche starke Antihaftwirkung hat. Der Heizdorn 8' des Heizelementes 6' weist eine konische äußere Nutzfläche 16' auf, welche mit einer Beschichtung 17' versehen ist, die gegenüber dem Rohr 1' überhaupt keine oder allenfalls eine sehr geringe Antihaftwirkung hat, so daß die Haftkraft zwischen dem Rohr 1' und dem Heizdorn 8' beim Abziehen des Rohres 1' vom Heizdom 8' ein Aufreißen und eine entsprechende Vergrößerung der zu verschweißenden inneren Oberfläche des Rohres 1' bewirkt.

Das Rohrformstück 2' wird mit seinem mit dem Rohr 1' zu verschweißenden Abschnitt 4' verminderten Durchmessers in die Heizmuffe 7' des Heizelements 6' eingeschoben. Gleichzeitig wird das zu verschweißende Ende 18' des Rohres 1' auf den Heizdorn 8' des Heizelementes 6' aufgeschoben. Das Heizelement 6' ist auf Schweißtemperatur erwärmt. Das Rohrformstück 2' bzw. dessen Abschnitt 4' und das Rohr 1' bzw. dessen Ende 18' werden während einer gewissen Anwärmzeit in der Heizmuffe 7' bzw. auf dem Heizdorn 8' des Heizelementes 6' gehalten, um dann während einer vorgegebenen Umstellzeit davon weggezogen und so ineinandergesteckt zu werden, wie aus Fig. 7 ersichtlich, woran sich eine bestimmte Abkühlzeit anschließt.

Beim Rohr 1,1' kann es sich um ein aus mehreren Schichten unterschiedlichen Materials bestehendes Verbundrohr handeln, dessen äußere bzw. innere Schicht aus vernetztem Polyethylen (PE-X) besteht oder welches eine innere Schicht aus vernetztem Polyethylen (PE-X) aufweist, die durch Schälen des Rohres 1,1' im Bereich seines zu verschweißenden Endes 18,18' freigelegt worden ist. Das ganze Rohr 1,1' oder wenigstens die besagte Rohrschicht kann aus peroxidvernetztem Polyethylen (PE-Xa), silanvernetztem Polyethylen (PE-Xb), elektronenstrahlenvernetztem Polyethylen (PE-Xc), azovernetztem Polyethylen (PE-Xd) oder sonstwie vernetztem Polyethylen bestehen.

Beim Rohrformstück 2,2' kann es sich um einen Winkel ( Bogen, Krümmer ), ein T-Stück, eine Muffe, eine Kappe oder dergleichen handeln. Es kann auch aus unvemetztem, nicht modifiziertem Polyethylen mittlerer Dichte (PE-MD), unvemetztem, gegebenenfalls modifiziertem Polyethylen niedriger Dichte (PE-LD) oder unvernetztem, gegebenenfalls modifiziertem Polyethylen hoher Dichte (PE-HD) bestehen.

Die Stützhülse 3 muß nicht unbedingt aus Messing hergestellt sein, sondern kann auch aus einem anderen geeigneten Metall oder aus einem geeigneten Kunststoff bestehen.

Bei dem Rohr 1,1' und dem Rohrformstück 2,2' kann es sich insbesondere um Teile einer Rohrleitung der Sanitär-, Heizungs-, Lüftungs-, Klima-, Gas-, Druckluft-, Haus- oder Industrieversorgungstechnik handeln.

## Patentansprüche

1. Verfahren zur gegenseitigen Verbindung durch Heizelement-Muffenschweißen eines Rohres (1,1'), das mindestens in dem an die zu verschweißende Oberfläche angrenzenden Bereich aus vemetztem Polyethylen (PE-X) besteht, und eines Rohrformstücks (2,2') aus unvernetztem, gegebenenfalls zur Verringerung des Schmelzindex modifiziertem Polyethylen (PE), **dadurch gekennzeichnet, daß** die zum Erwärmen des Rohres (1) dienende Heizmuffe (7) des Heizelementes (6) eine konische innere Nutzfläche (14) oder der zum Erwärmen des Rohres (1') dienende Heizdom (8') des Heizelementes (6') eine konische äußere Nutzfläche (16') aufweist, welche gegenüber dem Rohr (1, 1') keine oder eine nur geringe Antihaftwirkung zeigt, so daß die Haftkraft zwischen dem Rohr (1) und der Heizmuffe (7) bzw. zwischen dem Rohr (1') und dem Heizdom (8') beim Herausziehen des Rohres (1) aus der Heizmuffe (7) bzw. beim Abziehen des Rohres (1') vom Heizdom (8*) ein Aufreißen und eine entsprechende Vergrößerung der zu verschweißenden Oberfläche des Rohres (1,1') bewirkt.

2. Verfahren nach Anspruch 1, **dadurch gekennzeichnet, daß** die konische innere Nutzfläche (14) der zum Erwärmen des Rohres (1) dienenden Heizmuffe (7) des Heizelementes (6) bzw. die konische äußere Nutzfläche (16') des zum Erwärmen des Rohres (1') dienenden Heizdorns (8') des Heizelementes (6') mit einer Beschichtung (15,17') versehen ist, welche gegenüber dem Rohr (1,1') keine oder eine nur geringe Antihaftwirkung zeigt, so daß die Haftkraft zwischen dem Rohr (1) und der Heizmuffe (7) bzw. zwischen dem Rohr (1') und dem Heizdorn (8') beim herausziehen des Rohres (1) aus der Heizmuffe (7) bzw. beim Abziehen des Rohres (1') vom Heizdorn (8') ein Aufreißen und eine entsprechende Vergrößerung der zu verschweißenden Oberfläche des Rohres (1,1') bewirkt.

3. Verfahren nach Anspruch 1 oder 2, **dadurch gekennzeichnet, daß** der zum Erwärmen des Rohrformstücks (2) dienende Heizdorn (8) des Heizelementes (6) eine konische äußere Nutzfläche (16) bzw. die zum Erwärmen des Rohrformstücks (2') dienende Heizmuffe (7') des Heizelementes (6') eine konische innere Nutzfläche (14') aufweist, welche mit einer Beschichtung (17,15') versehen ist, die gegenüber dem Rohrformstück (2,2') eine zur Verhinderung des Anhaftens des Rohrformstücks (2,2') am Heizdom (8) bzw. an der Heizmuffe (7') ausreichende bis außerordentlich starke Antihaftwirkung zeigt.

4. Verfahren nach den Ansprüchen 2 und 3 zur gegenseitigen Verbindung eines Rohres (1), das mindestens in dem an die äußere Oberfläche angrenzenden Bereich aus vernetztem Polyethylen (PE-X) besteht, und eines Rohrformstücks (2) aus unvernetztem, gegebenenfalls modifiziertem Polyethylen (PE) durch Heizelement-Muffenschweißen, **dadurch gekennzeichnet, daß**
a) die zum Erwärmen des Rohres (1) dienende Heizmuffe (7) des Heizelementes (6) eine konische innere Nutzfläche (14) mit einer Beschichtung (15) aufweist, welche gegenüber dem Rohr (1) keine oder eine nur geringe Antihaftwirkung zeigt,
b) der zum Erwärmen des Rohrformstücks (2) dienende Heizdom (8) des Heizelementes (6) eine konische äußere Nutzfläche (16) mit einer Beschichtung (17) aufweist, welche gegenüber dem Rohrformstück (2) eine zur Verhinderung des Anhaftens des Rohrformstücks (2) am Heizdorn (8) ausreichende bis außerordentlich starke Antihaftwirkung zeigt,
c) die beiden Enddurchmesser (A,B) der beschichteten Nutzfläche (14) der Heizmuffe (7) größer, vorzugsweise bis zu 20 % größer, und der Konuswinkel (β) der beschichteten Nutzfläche (14) der Heizmuffe (7) merklich größer, vorzugsweise aber ebenfalls bis zu 20 % größer, als gemäß Richtlinie DVS 2208 / Teil 1 üblich gewählt werden,
d) die beiden Enddurchmesser (C,D) der beschichteten Nutzfläche (16) des Heizdoms (8) größer, vorzugsweise bis zu 20 % größer, als gemäß Richtlinie DVS 2208 / Teil 1 üblich und der Konuswinkel (γ) der beschichteten Nutzfläche (16) des Heizdorns (8) wie gemäß Richtlinie DVS 2208 / Teil 1 üblich gewählt werden,
e) die beiden Enddurchmesser (d₁,d₂) der konischen Bohrung (5) des mit dem Rohr (1) zu verschweißenden Abschnitts (4) des Rohrformstücks (2) an die Enddurchmesser (C,D) der Nutzfläche (16) des Heizdorns (8) angepaßt werden und der Konuswinkel (α) der Bohrung (5) wie gemäß DIN 16 963 / Teile 8 bis 10 üblich gewählt wird,
f) eine Schweißtemperatur wie gemäß Merkblatt DVS 2207 / Teil 1 üblich oder geringfügig höher, vorzugsweise bis zu 20 % höher, eingehalten wird und
g) eine Anwärmzeit wie gemäß Merkblatt DVS 2207 / Teil 1 üblich oder geringfügig länger, vorzugsweise aber bis zu 50 % länger, eingehalten wird.

5. Verfahren nach Anspruch 4, **dadurch gekennzeichnet, daß**
a) die beschichtete Nutzfläche (14) der aufgeheizten Heizmuffe (7) mit einem mündungsseitigen Enddurchmesser (A) von etwa 18,1 mm, einem bodenseitigen Enddurchmesser (B) von etwa 17,5 mm und einer Länge (E) von etwa 12 mm versehen wird,
b) die beschichtete Nutzfläche (16) des aufgeheizten Heizdorns (8) mit einem kopfseitigen Enddurchmesser (C) von etwa 17,9 mm, einem fußseitigen Enddurchmesser (D) von etwa 18,1 mm und einer Länge (G) von etwa 14 mm versehen wird,
c) das Rohr (1) mit einem Außendurchmesser (d) von etwa 18 mm und die konische Bohrung (5) das mit dem Rohr (1) zu verschweißenden Abschnitts (4) des Rohrformstücks (2) mit einem inneren Enddurchmesser (d₁) von etwa 17,8 mm, einem mündungsseitigen Enddurchmesser (d₂) von etwa 18,0 mm und einer Mindestlänge (t₁) von etwa 14 mm versehen wird,
d) eine Schweißtemperatur im Bereich von 260 ± 10°C bis 310 ± 10°C eingehalten wird und
e) eine Anwärmzeit in Bereich von 5 s bis 10 s, eine Umstellzeit von etwa 4 s und eine Abkühlzeit von etwa 2 min eingehalten werden.

6. Verfahren nach einem der vorstehenden Ansprüche **dadurch gekennzeichnet, daß** das Rohr (1,1') mindestens in dem an die zu verschweißende Oberfläche angrenzenden Bereich aus peroxidvernetztem Polyethylen (PE-Xa), silanvemetztem Polyethylen (PE-Xb), elektronenstrahlenvernetztem Polyethylen (PE-Xc) oder azovernetztem Polyethylen (PE-Xd) besteht.

7. Verfahren nach einem der vorstehenden Ansprüche, **dadurch gekennzeichnet, daß** das Rohrformstück (2,2') aus unvernetztem, gegebenenfalls modifiziertem Polyethylen niedriger Dichte (PE-LD), unvernetztem, gegebenenfalls modifiziertem Polyethylen mittlerer Dichte (PE-MD) oder unvernetztem, gegebenenfalls modifiziertem Polyethylen hoher Dichte (PE-HD) besteht.

8. Verfahren nach einem der vorstehenden Ansprüche **dadurch gekennzeichnet, daß** in das Rohr (1) eine Stützhülse (3) eingesetzt wird, welche einen äußeren Ringvorsprung (19) zur Anlage an dem zu verschweißenden Rohrende (18) und einen an den Ringvorsprung (19) anschließenden axialen Fortsatz (20) zum Eingriff in die dem Rohr (1) benachbarte Bohrung (23) des Rohrformstücks (2) aufweist.

9. Verfahren nach Anspruch 8, **dadurch gekennzeichnet, daß** die Länge (S) der Stützhülse (3) mindestens dem Zweifachen der Einschweißtiefe (T) entspricht.

10. Verfahren nach Anspruch 8 oder 9, **dadurch gekennzeichnet, daß** der axiale Fortsatz (20) der Stützhülse (3) sich zu seinem freien Ende (21) hin verjüngt.

11. Verfahren nach Anspruch 8, 9 oder 10, **dadurch gekennzeichnet, daß** die Stützhülse (3) aus Metall, vorzugsweise Messing, oder aus Kunststoff besteht.

12. Verfahren nach Anspruch 8, 9, 10 oder 11, **dadurch gekennzeichnet, daß** die Heizmuffe (7) im Anschluß an ihre Nutzfläche (14) eine Vertiefung (22) zur Aufnahme des axialen Fortsatzes (20) der Stützhülse (3) aufweist.

13. Vorrichtung zur Durchführung des Verfahrens nach einem der Ansprüche 1 bis 12, **gekennzeichnet durch** ein Heizelement (6,6') mit einer Heizmuffe (7) bzw. einen Heizdorn (8') zum Erwärmen des Rohres (1,1'), die eine konische innere Nutzfläche (14) bzw. der eine konische äußere Nutzfläche (16') aufweist, welche gegenüber dem Rohr (1,1') keine oder eine nur geringe Antihaftwirkung zeigt, so daß die Haftkraft zwischen dem Rohr (1) und der Heizmuffe (7) bzw. zwischen dem Rohr (1') und dem Heizdorn (8') beim Herausziehen des Rohres (1) aus der Heizmuffe (7) bzw. beim Abziehen des Rohres (1') vom Heizdorn (8') ein Aufreißen und eine entsprechende Vergrößerung der zu verschweißenden Oberfläche des Rohres (1,1') bewirkt.

14. Vorrichtung nach Anspruch 13, **dadurch gekennzeichnet, daß** die konische inneren Nutzfläche (14) der zum Erwärmen des Rohres (1) dienenden Heizmuffe (7) des Heizelementes (6) bzw. die konische äußere Nutzfläche (16') des zum Erwärmen des Rohres (1') dienenden Heizdoms (8') des Heizelementes (6') mit einer Beschichtung (15,17') versehen ist, welche gegenüber dem Rohr (1,1') keine oder eine nur geringe Antihaftwirkung zeigt, so daß die Haftkraft zwischen dem Rohr (1) und der Heizmuffe (7) bzw. zwischen dem Rohr (1') und dem Heizdom (8') beim Herausziehen des Rohres (1) aus der Heizmuffe (7) bzw. beim Abziehen des Rohres (1') vom Heizdorn (8') ein Aufreißen und eine entsprechende Vergrößerung der zu verschweißenden Oberfläche des Rohres (1,1') bewirkt.

15. Vorrichtung nach Anspruch 13 oder 14, **dadurch gekennzeichnet, daß** das Heizelement (6,6') einen Heizdorn (8) mit einer konischen äußeren Nutzfläche (16) bzw. eine Heizmuffe (7') mit einer konischen inneren Nutzfläche (14') zum Erwärmen des Rohrformstücks (2,2') aufweist, welche mit einer Beschichtung (17,15') versehen ist, die gegenüber dem Rohrformstück (2,2') eine zur Verhinderung des Anhaftens des Rohrformstücks (2,2') am Heizdorn (8) bzw. an der Heizmuffe (7') ausreichende bis außerordentlich starke Antihaftwirkung zeigt.

16. Vorrichtung nach den Ansprüchen 14 und 15 zur Durchführung des Verfahrens nach Anspruch 4 oder 5, **gekennzeichnet, durch** ein Heizelement (6) mit
a) einer Heizmuffe (7) zum Erwärmen des Rohres (1), die eine konische innere Nutzfläche (14) mit einer Beschichtung (15) aufweist, welche gegenüber dem Rohr (1) keine oder eine nur geringe Antihaftwirkung zeigt, und
b) einem Heizdom (8) zum Erwärmen des Rohrformstücks (2), der eine konische äußere Nutzfläche (16) mit einer Beschichtung (17) aufweist, welche gegenüber dem Rohrformstück (2) eine zur Verhinderung des Anhaftens des Rohrformstücks (2) am Heizdom (8) ausreichende bis außerordentlich starke Antihaftwirkung zeigt, wobei
c) die beiden Enddurchmesser (A,B) der beschichteten Nutzfläche (14) der Heizmuffe (7) größer, vorzugsweise bis zu 20 % größer, und der Konuswinkel (β) der beschichteten Nutzfläche (14) der Heizmuffe (7) merklich größer, vorzugsweise aber ebenfalls bis zu 20 % größer, als gemäß Richtlinie DVS 2208 / Teil 1 üblich gewählt sind und
d) die beiden Enddurchmesser (C,D) der beschichteten Nutzfläche (16) des Heizdorns (8) größer, vorzugsweise bis zu 20 % größer, als gemäß Richtlinie DVS 2208 / Teil 1 üblich und der Konuswinkel (γ) der beschichteten Nutzfläche (16) des Heizdorns (8) wie gemäß Richtlinie DVS 2208 / Teil 1 üblich gewählt sind.

17. Verbindung eines Rohres (1,1'), das mindestens in dem an die zu verschweißende Oberfläche angrenzenden Bereich aus vernetztem Polyethylen (PE-X) besteht und eines Rohrformstücks (2,2'), aus unvernetztem, gegebenenfalls modifiziertem Polyethylen (PE), hergestellt nach dem Verfahren gemäß einem der Ansprüche 1 bis 12.

## Claims

1. Process for the mutual connection by heating element socket welding of a pipe (1,1') which is made of cross-linked polyethylene (PE-X), at least in the area adjoining the surface to be welded, and a pipe fitting (2,2') made of not cross-linked polyethylene (PE), optionally modified for reducing the melt flow index, **characterized in that** the heating socket (7) of the heating element (6) which serves to heat up the pipe (1) has a conical inner work area (14) or the heating pin (8') of the heating element (6') which serves to heat up the pipe (1') has a conical outer work area (16'), which has none or only a negligible anti - adhesive effect whith respect to the pipe (1,1'), so that the adhesive force between the pipe (1) and the heating socket (7) or between the pipe (1') and the heating pin (8') causes an opening and a corresponding enlargement of the surface of the pipe (1,1') which is to be welded when the pipe (1) is pulled out from the heating socket (7) or when the pipe (1') is removed from the heating pin (8').

2. Process according to claim 1, **characterized in that** the conical inner work area (14) of the heating socket (7) of the heating element (6) which serves to heat up the pipe (1) or the conical outer work area (16') of the heating pin (8') of the heating element (6') which serves to heat up the pipe (1') is coated with a layer (15,17') which manifests none or only a negligible anti-adhesive effect with respect to the pipe (1,1'), so that the adhesive force between the pipe (1) and the heating socket (7) or between the pipe (1') and the heating pin (8') causes an opening and a corresponding enlargement of the surface of the pipe (1,1') which is to be welded when the pipe (1) is pulled out from the heating socket (7) or when the pipe (1') is removed from the heating pin (8').

3. Process according to claim 1 or 2, **characterized in that** the heating pin (8) of the heating element (6) which serves to heat up the pipe fitting (2) is provided with a conical outer work area (16) or the heating socket (7') of the heating element (6') which serves to heat up the pipe fitting (2') is provided with a conical inner work area (14'), which is coated with a layer (17,15') which with respect to the pipe fitting (2,2') manifests an anti-adhesive effect sufficient to prevent the adhesion of the pipe fitting (2,2') on the heating pin (8) or in the heating socket (7') up to an extraordinarily strong anti-adhesive effect.

4. Process according to claims 2 and 3 for the mutual connection by heating element socking welding of a pipe (1), which is made of cross-linked polyethylene (PE-X), at least in the area adjoining the outer surface, and a pipe fitting (2) made of not cross-linked polyethylene (PE), optionally modified, **characterized in that**
a) the heating socket (7) of the heating element (6) which serves to heat up the pipe (1) has a conical inner work area (14) coated with a layer (15) which manifests none or only a negligible anti-adhesive effect with respect to the pipe (1),
b) the heating pin (8) of the heating element (6) which serves to heat up the pipe fitting (2) has a conical outer work area (16) coated with a layer (17), which with respect to the pipe fitting (2) manifests an anti-adhesive effect sufficient to prevent the adhesion of the pipe fitting (2) on the heating pin (8) up to an extraordinarily strong anti-adhesive effect,
c) the two end diameters (A,B) of the coated work area (14) of the heating socket (7) are selected larger, preferably up to 20 % larger, and the cone angle (β) of the coated work area (14) of the heating socket (7) is selected notably larger, but preferably also up to 20 % larger, than usual according to guideline DVS 2208 / part 1,
d) the two end diameters (C,D) of the coated work area (16) of the heating pin (8) are selected larger, preferably up to 20 % larger, than usual according to guideline DVS 2208 / part 1 and the cone angle (γ) of the coated work area (16) of the heating pin (8) is selected as usual according to guideline DVS 2208 / part 1,
e) the two end diameters (d₁, d₂ ) of the conical bore hole (5) of the section (4) of the pipe fitting (2) which is to be welded with the pipe (1) are adjusted to the end diameters (C,D) of the work area (16) of the heating pin (8) and the cone angle (α) of the bore hole (5) is selected as usual according to DIN 16 963 / parts 8 to 10,
f) a welding temperature as usual according to instruction pamphlet DVS 22071 / part 1 or slightly higher, preferably up to 20 % higher, is observed and
g) a warm-up period as usual according to instruction pamphlet DVS 2207 / part 1 or slightly longer, but preferably up to 50 % longer, is maintained.

5. Process according to claim 4, **characterized in that**
a) the coated work area (14) of the heated-up heating socket (7) is provided with an end diameter (A) of about 18.1 mm on the opening side, an end diameter (B) of about 17.5 mm on the bottom side and a length (E) of about 12 mm,
b) the coated work area (16) of the heated-up heating pin (8) is provided with an end diameter (C) of about 17.9 mm on the head side, an end diameter (D) of about 18.1 mm on the foot side and a length (G) of about 14 mm,
c) the pipe (1) is provided with an outer diameter (d) of about 18 mm and the conical bore hole (5) of the section (4) of the pipe fitting (2) which is to be welded with the pipe (1) is provided with an inner end diameter (d₁) of about 17.8 mm, an end diameter (d₂) of about 18.0 mm on the opening side and a minimum length (t₁) of about 14 mm,
d) a welding temperature in the range from 260 ± 10°C to 310 ± 10°C is maintained and
e) a warm-up period in the range from 5 s to 10 s, a change-over period of about 4 s and a cooling period of about 2 min are observed.

6. Process according to one of the above claims, **characterized in that** the pipe (1,1') consists at least in the area adjoining the surface which is to be welded of peroxide cross-linked polyethylene (PE-Xa), silane cross-linked polyethylene (PE-Xb), electron radiation cross-linked polyethylene (PE-Xc) or azo cross-linked polyethylene (PE-Xd).

7. Process according to one of the above claims, **characterized in that** the pipe fitting (2,2') consists of not cross-linked, optionally modified polyethylene of low density (PE-LD), not cross-linked, optionally modified polyethylene of medium density (PE-MD) or not cross-linked, optionally modified polyethylene of high density (PE-HD).

8. Process according to one of the above claims, **characterized in that** a support sleeve (3) is inserted into the pipe (1) which has an outer ring projection (19) for resting against the pipe end (18) to be welded and which has an axial projection (20) adjoining the ring projection (19) for engaging in the bore hole (23) adjacent to the pipe (1) of the pipe fitting (2).

9. Process according to claim 8, **characterized in that** the length (S) of the support sleeve (3) corresponds to at least twice the welding depth (T).

10. Process according to claim 8 or 9, **characterized in that** the axial projection (20) of the support sleeve (3) tapers to the free end (21).

11. Process according to claim 8, 9 or 10, **characterized in that** the support sleeve (3) consists of metal, preferably brass, or of synthetic.

12. Process according to claim 8, 9, 10 or 11, **characterized in that** the heating socket (7) has a depression (22) adjacent to its work area (14) for receiving the axial projection (20) of the support sleeve (3).

13. Device to execute the process according to one of claims 1 to 12, **characterized by** a heating element (6,6') having a heating socket (7) or a heating pin (8') to heat-up the pipe (1,1') which has a conical inner work area (14) or a conical outer work area (16'), which manifests none or only a negligible anti-adhesive effect with respect to the pipe (1,1'), so that the adhesive force between the pipe (1) and the heating socket (7) or between the pipe (1') and the heating pin (8') causes an opening and a corresponding enlargement of the surface to be welded of the pipe (1,1'), when the pipe (1) is pulled out from the heating socket (7) or when the pipe (1') is-removed from the heating pin (8').

14. Device according to claim 13, **characterized in that** the conical inner work area (14) of the heating socket (7) of the heating element (6) which serves to heat up the pipe (1) or the conical outer work area (16') of the heating pin (8') of the heating element (6') which serves to heat up the pipe (1') is coated with a layer (15,17') which manifests none or only a negligible anti-adhesive effect with respect to the pipe (1,1'), so that the adhesive force between the pipe (1) and the heating socket (7) or between the pipe (1') and the heating pin (8') causes an opening and a corresponding enlargement of the surface to be welded of the pipe (1,1'), when the pipe (1) is pulled out from the heating socket (7) or when the pipe (1') is removed from the heating pin (8').

15. Device according to claim 13 or 14, **characterized in that** the heating element (6,6') has a heating pin (8) with a conical outer work area (16) or a heating socket (7') with a conical inner work area (14') for heating up the pipe fitting (2,2'), which work area (16,14') is coated with a layer (17,15') which with respect to the pipe fitting (2,2') manifests an anti-adhesive effect sufficient to prevent the adhesion of the pipe fitting (2,2') on the heating pin (8) or in the heating socket (7') up to an extraordinarily strong anti-adhesive effect.

16. Device according to claims 14 and 15 for executing the process according to claim 4 or 5, **characterized by** a heating element (6) having
a) a heating socket (7) for heating-up the pipe (1) which has a conical inner work area (14) coated with a layer (15) which manifests none or only a negligible anti-adhesive effect with respect to the pipe (1) and
b) a heating pin (8) for heating-up the pipe fitting (2) which has a conical outer work area (16) coated with a layer (17) which with respect to the pipe fitting (2) manifests an anti-adhesive effect sufficient to prevent the adhesion of the pipe fitting (2) on the heating pin (8) up to an extraordinarly strong anti-adhesive effect, wherein
c) the two end diameters (A, B) of the coated work area (14) of the heating socket (7) are larger, preferably up to 20 % larger, and the cone angle (β) of the coated work area (14) of the heating socket (7) is notably larger, but preferably also up to 20 % larger, than usual according to guideline DVS 2208 / part 1 and
d) the two end diameters (C,D) of the coated work area (16) of the heating pin (8) are larger, preferably up to 20 % larger, than usual according to guideline DVS 2208 / part 1 and the cone angle (γ) of the coated work area (16) of the heating pin (8) is as usual according to guideline DVS 2208 / part 1.

17. Connection of a pipe (1,1') which consists of cross-linked polyethylene (PE-X), at least in the area adjoining the surface which is to be welded, and a pipe fitting (2,2') made of not cross-linked, optionally modified polyethylene (PE), which is produced by the process according to one of claims 1 to 12.

## Revendications

1. Procédé pour assembler par soudage de manchon à élément chauffant un tuyau (1, 1') composé au moins dans la zone contiguë à la surface à souder de polyéthylène réticulé (PE-X) et un raccord de tuyau (2, 2') en polyéthylène (PE) non réticulé et éventuellement modifié afin de réduire l'indice de fusion, **caractérisé en ce que** le manchon chauffant (7) de l'élément chauffant (6) servant à chauffer le tuyau (1) possède une surface utile intérieure conique (14) ou le mandrin chauffant (8') de l'élément chauffant (6') servant à chauffer le tuyau (1') a une surface utile extérieure conique (16'), la quelle exerce peu ou pas du tout d'effet anti-adhésif vis-à-vis du tuyau (1, 1'), de manière à ce que l'adhérence entre le tuyau (1) et le manchon chauffant (7) ou entre le tuyau (1') et le mandrin chauffant (8') provoque, lors du retrait du tuyau (1) hors du manchon chauffant (7) ou du tuyau (1') du mandrin chauffant (8'), un déchirement et un agrandissement correspondant de la surface à souder du tuyau (1, 1').

2. Procédé selon la revendication 1, **caractérisé en ce que** la surface utile intérieure conique (14) du manchon chauffant (7) de l'élément chauffant (6) servant à chauffer le tuyau (1) ou la surface utile extérieure conique (16') du mandrin chauffant (8') de l'élément chauffant (6') servant à chauffer le tuyau (1') est dotée d'un revêtement (15, 17') qui exerce peu ou pas du tout d'effet anti-adhésif vis-à-vis du tuyau (1, 1'), de manière à ce que l'adhérence entre le tuyau (1) et le manchon chauffant (7) ou entre le tuyau (1') et le mandrin chauffant (8') provoque, lors du retrait du tuyau (1) hors du manchon chauffant (7) ou du tuyau (1') du mandrin chauffant (8'), un déchirement et un agrandissement correspondant de la surface à souder du tuyau (1, 1').

3. Procédé selon la revendication 1 ou 2, **caractérisé en ce que** le mandrin chauffant (8) de l'élément chauffant (6) servant à chauffer le raccord de tuyau (2) présente une surface utile extérieure conique (16) ou le manchon chauffant (7') de l'élément chauffant (6') servant à chauffer le raccord de tuyau (2') présente une surface utile intérieure conique (14'), la quelle est pourvue d'un revêtement (17, 15') exerçant vis-à-vis du raccord de tuyau (2, 2') un effet anti-adhésif assez fort pour empêcher l'adhérence du raccord de tuyau (2, 2') sur le mandrin chauffant (8) ou le manchon chauffant (7'), à très fort.

4. Procédé selon les revendications 2 et 3 pour assembler par soudage de manchon à élément chauffant un tuyau (1) composé au moins dans la zone contiguë à la surface extérieure de polyéthylène réticulé (PE-X) et un raccord de tuyau (2) en polyéthylène (PE) non réticulé et éventuellement modifié, **caractérisé en ce que** :
a) le manchon chauffant (7) de l'élément chauffant (6) servant à chauffer le tuyau (1) présente une surface utile intérieure conique (14) pourvue d'un revêtement (15) qui exerce peu ou pas du tout d'effet anti-adhésif vis-à-vis du tuyau (1),
b) le mandrin chauffant (8) de l'élément chauffant (6) servant à chauffer le raccord de tuyau (2) présente une surface utile extérieure conique (16) pourvue d'un revêtement (17) exerçant vis-à-vis du raccord de tuyau (2) un effet anti-adhésif assez fort pour empêcher l'adhérence du raccord de tuyau (2) sur le mandrin chauffant (8), à très fort,
c) les deux diamètres d'extrémité (A, B) de la surface utile enduite (14) du manchon chauffant (7) sont plus grands, de préférence jusqu'à 20 % plus grands, et l'angle de cône (β) de la surface utile enduite (14) du manchon chauffant (7) est nettement plus grand, de préférence aussi jusqu'à 20 % plus grand, que les valeurs habituelles selon la directive DVS 2208/Partie 1,
d) les deux diamètres d'extrémité (C, D) de la surface utile enduite (16) du mandrin chauffant (8) sont plus grands, de préférence jusqu'à 20 % plus grands, que les valeurs habituelles selon la directive DVS 2208/Partie 1, et l'angle de cône (γ) de la surface utile enduite (16) du mandrin chauffant (8) est de l'ordre des valeurs habituelles selon la directive DVS 2208/Partie 1,
e) les deux diamètres d'extrémité (d₁, d₂) de l'alésage conique (5) de la partie (4) du raccord de tuyau (2) à souder au tuyau (1) sont adaptés aux diamètres d'extrémité (C, D) de la surface utile (16) du mandrin chauffant (8) et l'angle de cône (α) de l'alésage (5) est de l'ordre des valeurs habituelles selon DIN 16 963/Parties 8 à 10,
f) un etempérature de soudage ; de l'ordre des valeurs de la Fiche technique DVS 2207/Partie 1 ou légèrement plus élevée, de préférence jusqu'à 20 % plus élevée, est observée et
g) un temps de chauffe de l'ordre des valeurs de la Fiche technique DVS 2207/Partie 1 ou légèrement plus long, de préférence jusqu'à 50 % plus long, est observé.

5. Procédé selon la revendication 4, **caractérisé en ce que** :
a) la surface utile enduite (14) du manchon chauffant (7) chauffé a un diamètre d'extrémité du côté de l'embouchure (A) d'environ 18,1 mm, un diamètre d'extrémité du côté du fond (B) d'environ 17,5 mm et une longueur (E) d'environ 12 mm,
b) la surface utile enduite (16) du mandrin chauffant (8) chauffé a un diamètre d'extrémité du côté de la tête (C) d'environ 17,9 mm, un diamètre d'extrémité du côté de la base (D) d'environ 18,1 mm et une longueur (G) d'environ 14 mm,
c) le tuyau (1) a un diamètre extérieur (d) d'environ 18 mm et l'alésage conique (5) de la partie (4) du raccord de tuyau (2) à souder au tuyau (1) a un diamètre d'extrémité intérieur (d₁) d'environ 17,8 mm, un diamètre d'extrémité du côté de l'embouchure (d₂) d'environ 18,0 mm et une longueur minimale (t₁) d'environ 14 mm,
d) la température de soudage est de l'ordre de 260±10°C à 310±10°C,
e) le temps de chauffe est de l'ordre de 5 à 10 s, le temps de changement de 4 s environ et le temps de refroidissement de 2 minutes environ.

6. Procédé selon l'une quelconque des revendications précédentes, **caractérisé en ce que** le tuyau (1, 1') se compose, au moins dans sa partie contiguë à la surface à souder, de polyéthylène réticulé par peroxyde (PE-Xa), de polyéthylène réticulé par silane (PE-Xb), de polyéthylène réticulé par faisceau d'électrons (PE-Xc) ou de polyéthylène réticulé par un composé azo (PE-Xd).

7. Procédé selon l'une quelconque des revendications précédentes, **caractérisé en ce que** le raccord de tuyau (2, 2') se compose de polyéthylène à basse densité (PE-LD) non réticulé et éventuellement modifié, de polyéthylène à moyenne densité (PE-MD) non réticulé et éventuellement modifié ou de polyéthylène àhaute densité(PE-HD) non réticulé et éventuellement modifié.

8. Procédé selon l'une quelconque des revendications précédentes, **caractérisé en ce que** l'on introduit dans le tuyau (1) une douille de soutien (3) présentant une saillie annulaire extérieure (19) s'appuyant sur l'extrémité du tuyau à souder (18) et un prolongement axial (20) faisant suite à la saillie annulaire (19) et se mettant en prise dans l'alésage (23) du raccord de tuyau (2) voisin du tuyau (1).

9. Procédé selon la revendication 8, **caractérisé en ce que** la longueur (S) de la douille de soutien (3) correspond au moins au double de la profondeur de soudage (T).

10. Procédé selon la revendication 8 ou 9, **caractérisé en ce que** le prolongement axial (20) de la douille de soutien (3) se rétrécit vers son extrémité libre (21).

11. Procédé selon la revendication 8, 9 ou 10, **caractérisé en ce que** la douille de soutien (3) se compose de métal, de préférence de laiton, ou de plastique.

12. Procédé selon la revendication 8, 9, 10 ou 11, **caractérisé en ce que** le manchon chauffant (7) présente à la suite de sa surface utile (14) un renfoncement (22) destiné à recevoir le prolongement axial (20) de la douille de soutien (3).

13. Dispositif pour la mise en oeuvre du procédé selon l'une quelconque des revendications 1 à 12, **caractérisé en ce qu'**il comporte un élément chauffant (6, 6') avec un manchon chauffant (7) ou un mandrin chauffant (8') destiné à chauffer le tuyau (1, 1') et présentant une surface utile intérieure conique (14) ou une surface utile extérieure conique (16') qui exerce peu ou pas du tout d'effet anti-adhésif vis-à-vis du tuyau (1,1'), de manière à ce que l'adhérence entre le tuyau (1) et le manchon chauffant (7) ou entre le tuyau (1') et le mandrin chauffant (8') provoque, lors du retrait du tuyau (1) hors du manchon chauffant (7) ou du tuyau (1') du mandrin chauffant (8'), un déchirement et un agrandissement correspondant de la surface à souder du tuyau (1, 1').

14. Dispositif selon la revendication 13, **caractérisé en ce que** la surface utile intérieure conique (14) du manchon chauffant (7) de l'élément chauffant (6) servant à chauffer le tuyau (1) ou la surface utile extérieure conique (16') du mandrin chauffant (8') de l'élément chauffant (6') servant à chauffer le tuyau (1') est dotée d'un revêtement (15, 17') qui exerce peu ou pas du tout d'effet anti-adhésif vis-à-vis du tuyau (1, 1'), de manière à ce que l'adhérence entre le tuyau (1) et le manchon chauffant (7) ou entre le tuyau (1') et le mandrin chauffant (8') provoque, lors du retrait du tuyau (1) hors du manchon chauffant (7) ou du tuyau (1') du mandrin chauffant (8'), un déchirement et un agrandissement correspondant de la surface à souder du tuyau (1, 1').

15. Dispositif selon la revendication 13 ou 14, **caractérisé en ce que** l'élément chauffant (6, 6') comprend, pour chauffer le raccord de tuyau (2, 2'), un mandrin chauffant (8) avec une surface utile extérieure conique (16) ou un manchon chauffant (7') avec une surface utile intérieure conique (14'), la quelle est pourvue d'un revêtement (17, 15') exerçant vis-à-vis du raccord de tuyau (2, 2') un effet anti-adhésif assez fort pour empêcher l'adhérence du raccord de tuyau (2, 2') sur le mandrin chauffant (8) ou le manchon chauffant (7'), à très fort.

16. Dispositif selon les revendications 14 et 15 pour la mise en oeuvre du procédé selon la revendication 4 ou 5, **caractérisé en ce que** l'élément chauffant (6) comprend :
a) un manchon chauffant (7) servant à chauffer le tuyau (1), qui présente une surface utile intérieure conique (14) pourvue d'un revêtement (15) qui exerce peu ou pas du tout d'effet anti-adhésif vis-à-vis du tuyau (1),
b) un mandrin chauffant (8) servant à chauffer le raccord de tuyau (2), qui présente une surface utile extérieure conique (16) pourvue d'un revêtement (17) exerçant vis-à-vis du raccord de tuyau (2) un effet anti-adhésif assez fort pour empêcher l'adhérence du raccord de tuyau (2) sur le mandrin chauffant (8), à très fort,
c) les deux diamètres d'extrémité (A, B) de la surface utile enduite (14) du manchon chauffant (7) sont plus grands, de préférence jusqu'à 20 % plus grands, et l'angle de cône (β) de la surface utile enduite (14) du manchon chauffant (7) est nettement plus grand, de préférence aussi jusqu'à 20 % plus grand, que les valeurs habituelles selon la directive DVS 2208/Partie 1,
d) les deux diamètres d'extrémité (C, D) de la surface utile enduite (16) du mandrin chauffant (8) sont plus grands, de préférence jusqu'à 20 % plus grands, que les valeurs habituelles selon la directive DVS 2208/Partie 1, et l'angle de cône (γ) de la surface utile enduite (16) du mandrin chauffant (8) est de l'ordre des valeurs habituelles selon la directive DVS 2208/Partie 1.

17. Assemblage d'un tuyau (1, 1') composé au moins dans la zone contiguë à la surface à souder de polyéthylène réticulé (PE-X) et d'un raccord de tuyau (2, 2') en polyéthylène (PE) non réticulé et éventuellement modifié fait par le procédé selon l'une quelconque des revendications 1 à 12.
